# EUROPEAN PATENT SPECIFICATION

(11) **EP 3 546 178 B1**
(45) Date of publication and mention of the grant of the patent: **22.04.2020**
(21) Application number: 19154955.9
(22) Date of filing: 01.02.2019
(51) Int. Cl.: B29C 45/60, B29C 45/47, B29C 45/52

(54) **INJECTION UNIT AND INJECTION MOLDING MACHINE**
EINSPRITZEINHEIT UND SPRITZGIESSMASCHINE
UNITÉ D'INJECTION ET MACHINE DE MOULAGE PAR INJECTION

(30) Priority: 29.03.2018 JP 2018065240
(43) Date of publication of application: 02.10.2019
(73) Proprietor: Sumitomo Heavy Industries, Ltd., Tokyo 141-6025 (JP)
(72) Inventor: MOROZUMI, Tomohito, Chiba-shi, Chiba 263-0001 (JP)
(74) Representative: Louis Pöhlau Lohrentz

(56) References cited:
- JP-A- H11 129 298

## Description

### BACKGROUND OF THE INVENTION

### Field of the Invention

The present invention relates to an injection unit and an injection molding machine.

### Description of Related Art

Japanese Unexamined Patent Publication No. 11-129298 discloses a screw head unit which includes a head body portion, a backflow prevention ring (referred to as a ring valve in Japanese Unexamined Patent Publication No. 11-129298) which is mounted in a displaceable manner in an axial direction, and a seal ring (referred to as a sheet ring in Japanese Unexamined Patent Publication No. 11-129298). In the screw head unit, when plasticizing is performed, the backflow prevent ring moves forward, and a front end of the backflow prevention ring abuts against a rear end of the head body portion to open a space for a resin flow path. In addition, when injection is performed, the backflow prevention ring moves rearward, and a rear end of the backflow prevention ring abuts against a front end of the seal ring to block the space for the resin flow path.

### SUMMARY OF THE INVENTION

Meanwhile, in a non-co-rotation type screw head unit in which the backflow prevention ring can freely rotate with respect to the head body portion, when the plasticizing is performed, the head body portion rotates in a state where the rear end of the head body portion and the front end of the backflow prevention ring come into contact with each other, and thus, a slide surface wears. Particularly, in a case where molding is performed at a high cycle using a resin having a high viscosity, a force of pressing the backflow prevention ring against the head body portion increases, the number of contacts increase, and thus, there is a problem that wear is promoted.

Accordingly, an object of the present invention is to provide an injection unit and an injection molding machine capable of suppressing wear in a contact surface between the head body portion and the backflow prevention ring.

According to an aspect of the present invention, there is provided an injection unit including: a cylinder; a screw which is disposed to be rotatable and movable forward or rearward in the cylinder; rotating means for rotating the screw; and forward/rearward movement means for moving the screw forward or rearward, in which the screw includes a screw head, a seal ring, and a flight screw which integrally rotate with each other, and a non-co-rotation backflow prevention ring, and the screw head includes a head groove portion which is spirally formed in a direction opposite to a direction of a spiral groove which is formed along a flight of the flight screw.

According to the present invention, it is possible to provide the injection unit and the injection molding machine capable of suppressing wear in a contact surface between the head body portion and the backflow prevention ring.

### BRIEF DESCRIPTION OF THE DRAWINGS

Fig. 1 is a view showing a state when a mold opening of an injection molding machine according to a first embodiment is completed.
Fig. 2 is a view showing a state when a mold of the injection molding machine according to the first embodiment is clamped.
Fig. 3 is a sectional view of a cylinder and a screw.
Fig. 4 is a perspective view of a screw head unit.
Fig. 5 is a side view showing a state of the screw head unit before a plasticizing process starts.
Fig. 6 is a sectional view showing a state of the screw head unit before the plasticizing process starts.
Fig. 7 is a side view showing a state of the screw head unit when the plasticizing process starts.
Fig. 8 is a sectional view showing a state of the screw head unit when the plasticizing process starts.
Fig. 9 is a side view showing a state of the screw head unit during the plasticizing process.
Fig. 10 is a sectional view showing a state of the screw head unit during the plasticizing process.
Fig. 11 is a side view of a screw head unit of a second embodiment.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### <<First Embodiment>>

### (Injection Molding Machine)

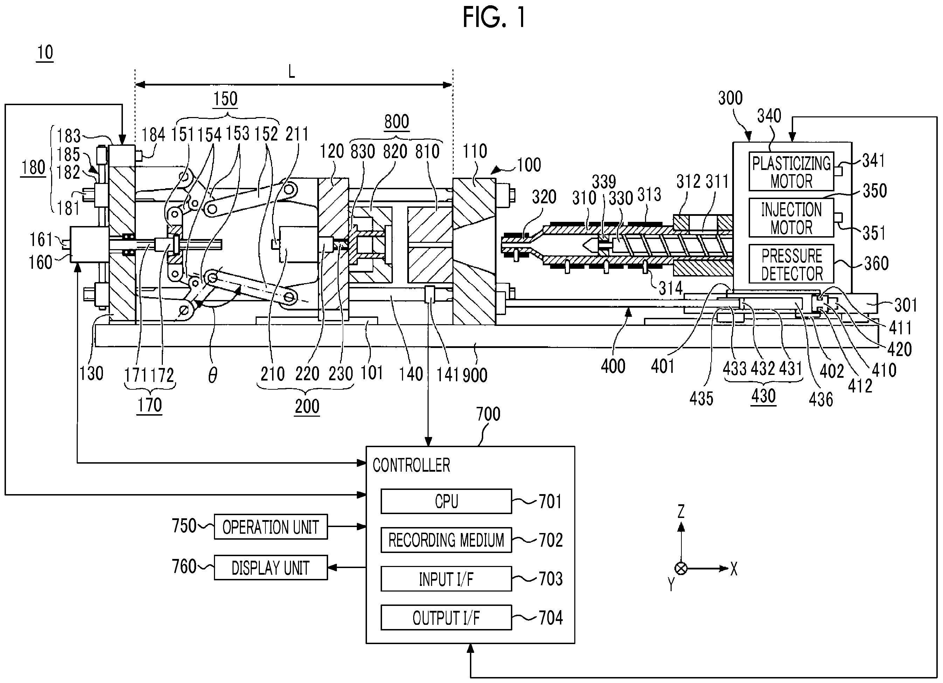

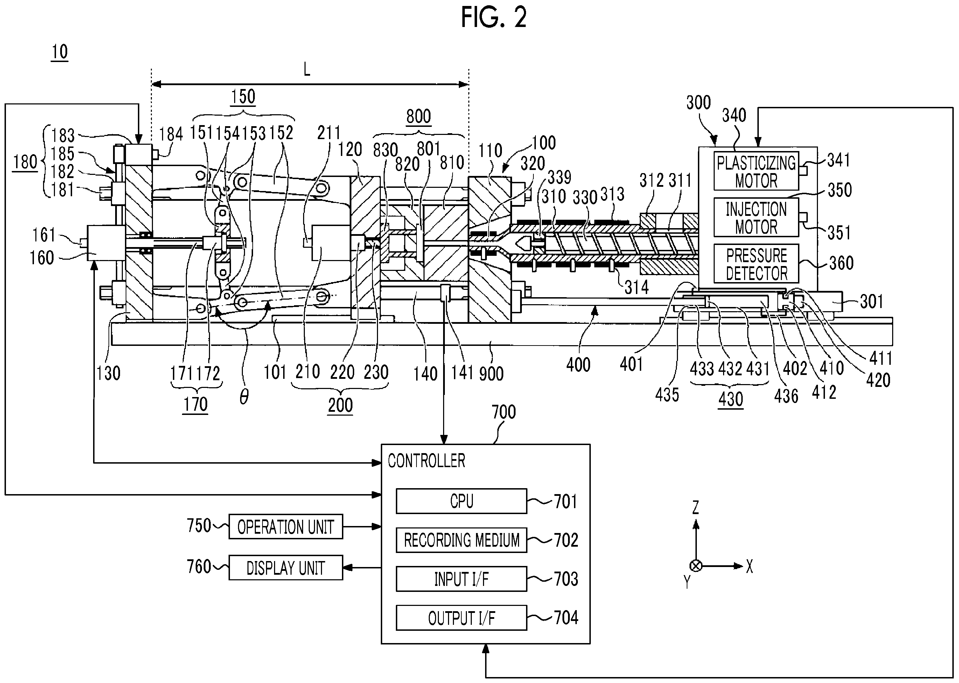

Fig. 1 is a view showing a state when a mold opening of an injection molding machine according a first embodiment is completed. Fig. 2 is a view showing a state when a mold of the injection molding machine according to the first embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where the a mold clamping unit 100 is a horizontal type mold clamping unit, the X direction is mold opening and closing directions, and the Y direction is a width direction of an injection molding machine 10. As shown in Figs. 1 and 2, the injection molding machines 10 include the mold clamping unit 100, an ejector unit 200, an injection unit 300, a movement unit 400, a controller 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 800. For example, the mold clamping unit 100 is a horizontal type mold clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected so as to be separated from the stationary platen 110, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the controller 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the mold opening process, the mold clamping motor 160 is driven to move the crosshead 151 rearward to a mold opening completion position at a set speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the mold clamping process are collectively set as a series of setting conditions. For example, a speed or positions (including mold opening/closing start position, speed switching position, mold closing completion position, and mold clamping position) of the crosshead 151 and the mold clamping force in the mold closing process and the mold clamping process are collectively set as a series of setting conditions. The mold opening/closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening process. For example, the speed or positions (including mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position maybe the same as the mold clamping position. In addition, the mold opening completion position and the mold opening/closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the controller 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 rearward at a set speed, and thus, the movable member 830 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the controller 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 800. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A backflow prevention ring 339 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 339 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 339 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

In addition, the backflow prevention ring 339 of the present embodiment is a non-co-rotation type ring which does not rotate together with the screw 330.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the controller 700. The pressure detector 360 is provided in a transmission path of the force between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotating speed of the screw 330 is detectedusing aplasticizing motor encoder 341. The plasticizing motor encoder 341 detects the rotation of the plasticizing motor 340 and sends a signal indicating a detection result to the controller 700. In addition, a screw rotating speed detector which detects the rotating speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw speed detector which detects the speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pushed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is also referred to as a "shot" or a "molding cycle". In addition, a time required for once shot is also referred to as a "molding cycle time".

For example, the once molding cycle includes the plasticizing process, the mold closing process, the mold clamping process, the filling process, the holding pressure process, the cooling process, the mold opening process, and the ejection process in this order. Here, this order is an order of the start of each process. In the filling process, the holding pressure process, and the cooling process are performed between the start of the mold clamping process to the end of the mold clamping process. The end of the mold clamping process coincides with the start of the mold opening process. In addition, in order to shorten the molding cycle time, the plurality of processes may be simultaneously performed. For example, the plasticizing process may be performed of the cooling process of the previous molding cycle, and in this case, the molding closing process may be performed at the final stage of the molding cycle. In addition, the filling process may start during the molding closing process. Moreover, the ejection process may be started during the mold opening process. In a case where an on/off valve which opens and closes the flow path of the nozzle 320 is provided, the mold opening process may be started during the plasticizing process. Accordingly, even when the molding opening process starts during the plasticizing process, if the on-off valve closes the flow path of the nozzle 320, the molding material does not leak from the nozzle 320.

The controller 700 is connected to an operation unit 750 or the display unit 760. The operation unit 750 receives an input operation from a user and outputs a signal corresponding to the input operation to the controller 700. The display unit 760 displays an operation screen corresponding to the input operation of the operation unit 750 under the control of the controller 700.

The operation screen is used for the setting of the injection molding machine 10 or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other. In addition, a plurality of operation units 750 may be provided.

### (Structure of Cylinder and Nozzle)

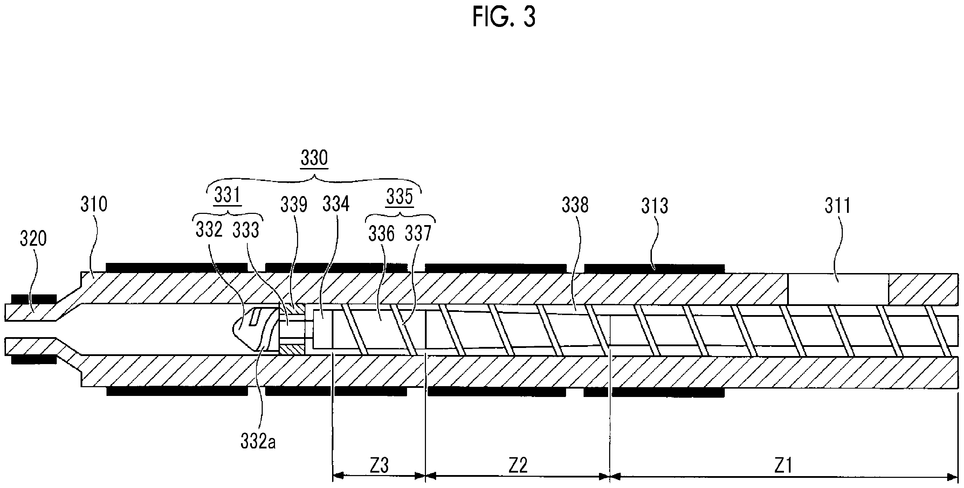

Fig. 3 is a sectional view of the cylinder 310 and the screw 330. In addition, Fig. 3 shows a state when the screw 330 moves most rearward in the molding cycle.

The screw 330 is disposed to be movable forward or rearward and rotatable inside the cylinder 310. The screw 330 includes a screw head 331, a seal ring 334, and a flight screw 335 in this order rearward from a front end of the screw 330. The screw head 331 and the seal ring 334 rotate together with the flight screw 335, and move forward or rearward together with the flight screw 335.

The screw head 331 includes a tapered head body portion 332 and a rod portion 333 which connects a rear end surface of the head body portion 332 and a front end surface of the seal ring 334 to each other. A front end of the rod portion 333 is smaller than the rear end surface of the head body portion 332, and a rear end of the rod portion 333 is smaller than the front end surface of the seal ring 334. In Fig. 3, the rear end surface of the head body portion 332 is perpendicular to an axial direction of the cylinder 310. However, the rear end surface may be inclined in the axial direction.

The flight screw 335 includes a rotary shaft 336 and a flight 337 which is spirally provided on an outer periphery of the rotary shaft 336. A spiral groove 338 is formed along the flight 337. If a plasticizing motor 340 is driven and the flight screw 335 rotates, the molding material is fed forward along the groove 338 of the flight screw 335.

The flight screw 335 includes a first section Z1, a second section Z2, and a third section Z3 in this order forward from a rear end of the flight screw 335. The first section Z1 is a section in which a solid phase of the molding material exists. The second section Z2 is a section in which both the solid phase and a liquid phase of the molding material exist. The third section Z3 is a section in which a liquid phase of the molding material exists.

A depth of the groove 338 is deep in the first section Z1, is shallow in the third section Z 3, and is shallower from an upstream side to a downstream side in the second section Z2. In this case, the first section Z1 is referred to as a supply zone, the second section Z2 is referred to as a compression zone, and the third section Z3 is referred to as a metering zone. In addition, the depth of the groove 338 may be constant.

The screw 330 includes a backflow prevention ring 339 around the rod portion 333 of the screw head 331. The backflow prevention ring 339 is formed in a ring shape, and has a through-hole into which the rod portion 333 is inserted. The backflow prevention ring 339 moves between a close position (refer to Fig. 2) at which the backflow prevention ring 339 comes into contact with the front end surface of the seal ring 334 and an open position (refer to Figs. 1 and 3) at which the backflow prevention ring 339 comes into contact with the rear end surface of the head body portion 332 of the screw head 331 along the rod portion 333. In addition, the backflow prevention ring 339 is a non-co-rotation type ring which does not rotate together with the flight screw 335.

If the injection motor 350 is driven and the flight screw 335 moves forward, the backflow prevention ring 339 is pushed rearward by a pressure of the molding material accumulated in front of the screw head 331. Accordingly, the backflow prevention ring 339 moves to the close position along the rod portion 333 and prevents the molding material accumulated in front of the screw head 331 from flowing rearward.

Meanwhile, if the plasticizing motor 340 is driven and the flight screw 335 rotates, the molding material is fed along the spiral groove 338 formed on the flight screw 335, and the backflow prevention ring 339 is pushed forward by the pressure of the molding material. Accordingly, the backflow prevention ring 339 moves the open position along the rod portion 333 and the molding material is fed to a portion in front of the screw head 331.

### (Shape of Screw Head Unit)

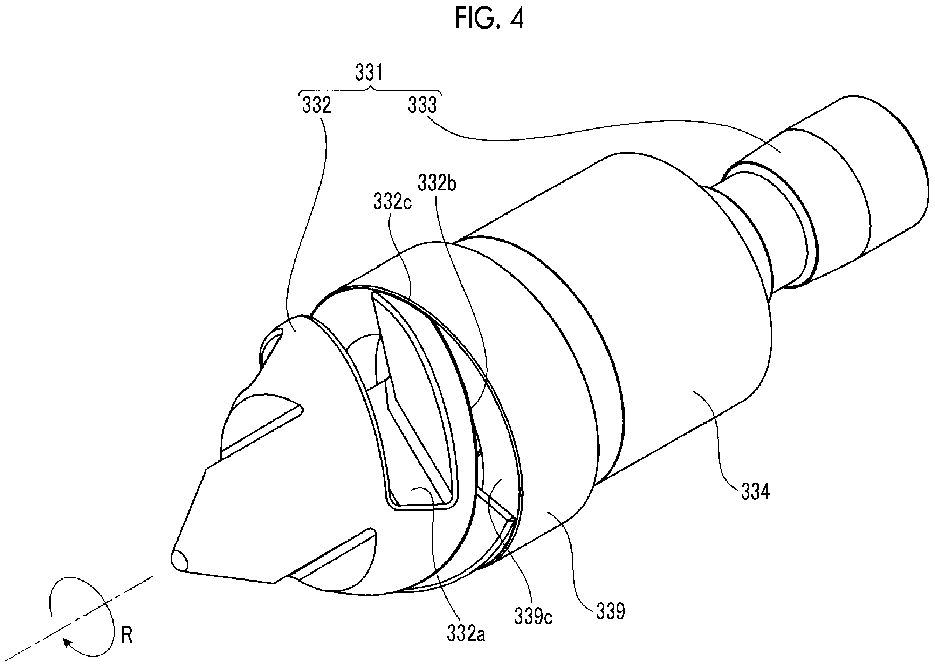

Fig. 4 is a perspective view of the screw head unit. In addition, a combination of the screw head 331, the seal ring 334, and the backflow prevention ring 339 is referred to as a screw head unit. Moreover, in Fig. 4, when the plasticizing process is performed, a direction in which the screw 330 rotates is indicated by a rotation direction R. That is, in the plasticizing process, the screw head 331 rotates in the clockwise direction when viewed from a distal end side of the screw head 331.

A spiral head groove portion 332a is formed on the head body portion 332. Here, as shown in Fig. 3, a rotation direction of the spiral groove 338 of the flight screw 335 is opposite to a rotation direction of the spiral head groove portion 332a of the head body portion 332.

That is, the screw 330 rotates in the clockwise direction (rotation direction R) when viewed from the distal end side of the screw head 331. The groove 338 of the flight screw 335 is formed in a right-handed direction so as to move forward in the direction of the nozzle 320 while rotating in the counterclockwise direction when viewed from the distal end side of the screw head 331. Meanwhile, the head groove portion 332a is formed in a left-handed direction so as to move forward in the direction of the nozzle 320 while rotating in the clockwise direction (rotation direction R) when viewed from the distal end side of the screw head 331. In addition, the screw 330 may rotate in the counterclockwise direction when viewed from the distal end side of the screw head 331. Moreover, the groove 338 of the flight screw 335 may be formed in the left-handed direction so as to move forward in the direction of the nozzle 320 while rotating in the clockwise direction when viewed from the distal end side of the screw head 331, and the head groove portion 332a may be formed in the right-handed direction so as to move forward in the direction of the nozzle 320 while rotating in the counterclockwise direction when viewed from the distal end side of the screw head 331.

In addition, a surface, which faces the front end surface of the backflow prevention ring 339, among side surfaces forming the head groove portion 332a is referred to as a groove portion side surface 332b. The groove portion side surface 332b is formed to be inclined in a direction separated from a backflow prevention ring facing surface 339c toward a front side in the rotation direction R. In addition, a head facing surface 332c which faces the backflow prevention ring 339 is formed on a rear end of the head body portion 332. Moreover, the backflow prevention ring facing surface 339c which faces the head body portion 332 is formed on a front end of the backflow prevention ring 339.

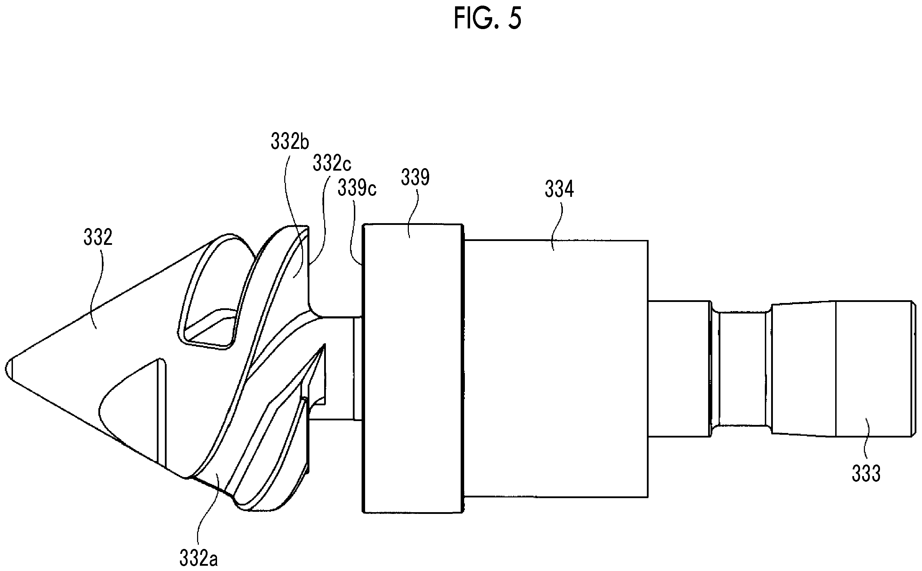

Next, an operation of the backflow prevention ring 339 in the screw head unit will be described with reference to Figs. 5 to 10.

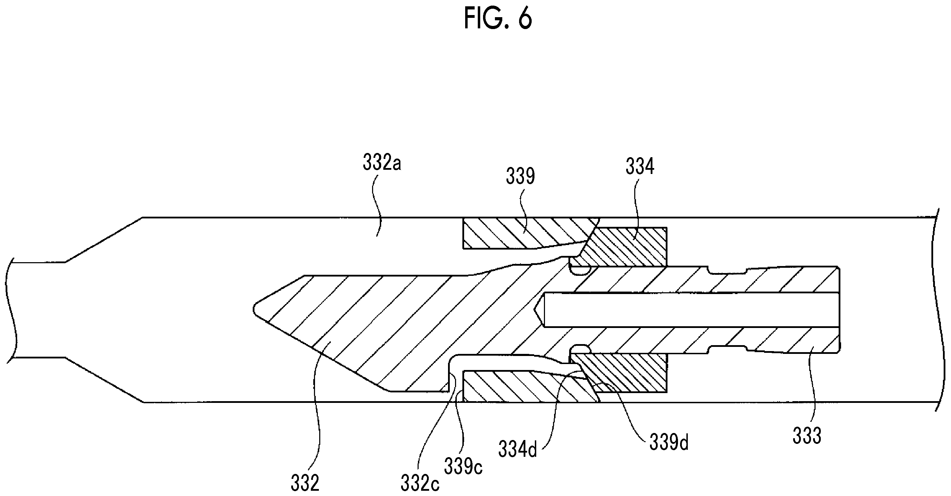

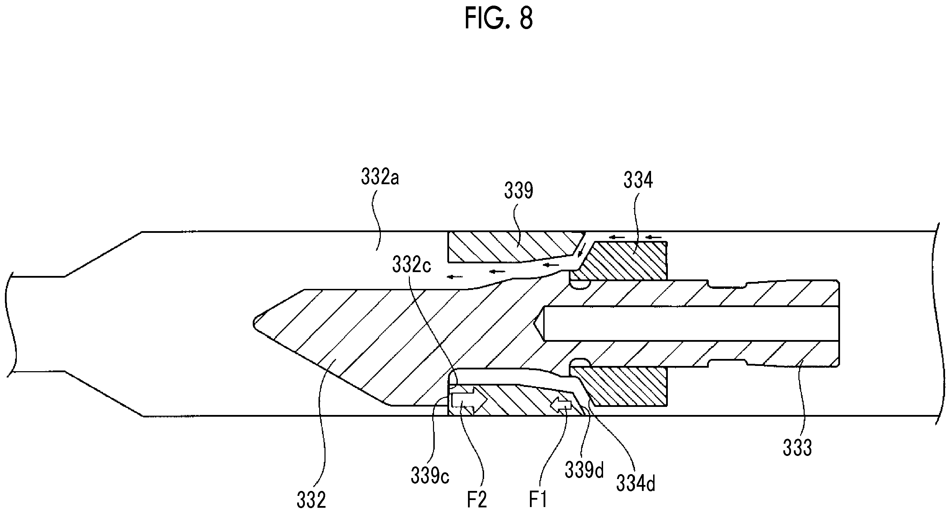

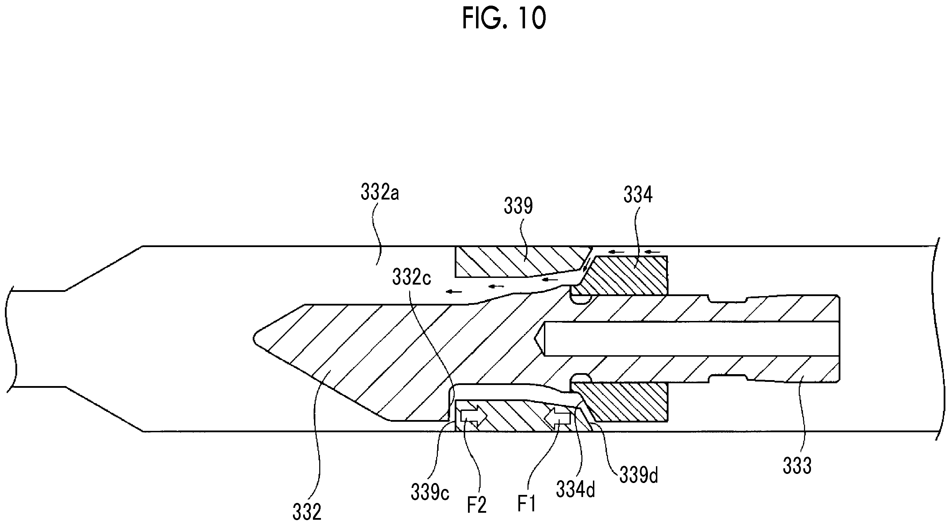

Fig. 5 is a side view showing a state of the screw head unit before the plasticizing process starts. Fig. 6 is a sectional view showing a state of the screw head unit before the plasticizing process starts. In addition, in Fig. 6 (and Figs. 8 and 10), in a cross section of the rod portion 333, a side above a rotation center is a sectional view taken along the spiral head groove portion 332a and schematically shows a flow path, and a side below the rotation center is a schematically sectional view taken along a position at which the head groove portion 332a is not provided.

Moreover, as shown in Fig. 6, a backflow prevention ring abutment surface 339d which comes into contact with the seal ring 334 is formed on the rear end of the backflow prevention ring 339. In addition, a seal ring abutment surface 334d which comes into contact with the backflow prevention ring 339 is formed on the front end of the seal ring 334. Moreover, as shown in Fig. 6, each of the backflow prevention ring abutment surface 339d and the seal ring abutment surface 334d may be a taper surface which is inclined in a radial direction and may be a surface perpendicular to the rotary shaft.

The state of the screw head unit before the plasticizing process starts is a state after the holding pressure process of a previous molding cycle is completed, the backflow prevention ring abutment surface 339d and the seal ring abutment surface 334d abut against each other, and a flow path of the molding material is closed.

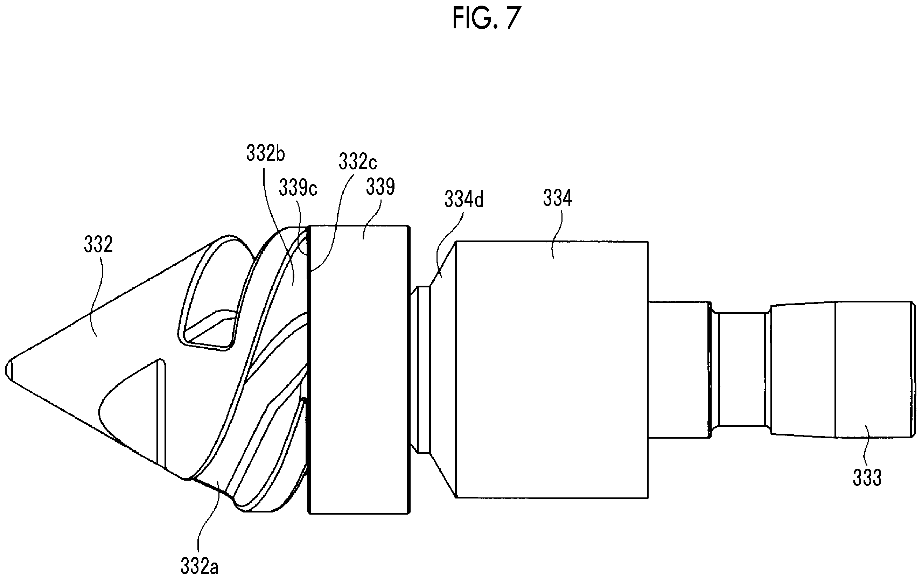

Fig. 7 is a side view showing a state of the screw head unit when the plasticizing process starts. Fig. 8 is a sectional view showing a state of the screw head unit when the plasticizing process starts.

In the plasticizing process, the screw 330 is rotated by the plasticizing motor 340. The molding material is fed by the rotation of the flight screw 335, and the backflow prevention ring 339 is pushed forward by a force F1 generated by a pressure of the molding material. Moreover, the force F1 for pushing the backflow prevention ring 339 increases as a pressure loss in the screw head unit of the flowing molding material increases. Accordingly, the backflow prevention ring 339 moves forward, a flow path between the backflow prevention ring abutment surface 339d and the seal ring abutment surface 334d is opened, and a clearance between the head facing surface 332c and the backflow prevention ring facing surface 339c is narrowed.

Accordingly, as shown by black arrows, the molding material flows to the head groove portion 332a through a portion between an inner periphery of the cylinder 310 and an outer periphery of the seal ring 334, the flow path between the backflow prevention ring abutment surface 339d and the seal ring abutment surface 334d, and a portion between an inner periphery of the backflow prevention ring 339 and an outer periphery of the screw head 331 (rod portion 333). In addition, the molding material is fed to a portion in front of the screw head 331.

Meanwhile, in the head body portion 332, the head groove portion 332a is formed in the direction opposite to the direction of the groove 338 of the flight screw 335. Accordingly, the groove portion side surface 332b is formed in a direction in which a portion between the groove portion side surface 332b and the backflow prevention ring facing surface 339c is narrowed when the groove portion side surface 332b rotates in the rotation direction R. In addition, in the rotation direction R, the groove portion side surface 332b is formed in front of the head facing surface 332c.

Accordingly, the groove portion side surface 332b rotating in the rotation direction R functions to feed a portion of the molding material inside the head groove portion 332a to the clearance between the head facing surface 332c and the backflow prevention ring facing surface 339c. In addition, the groove portion side surface 332b is inclined such that a front side in the rotation direction is wide and a rear side in the rotation is narrow with respect to the backflow prevention ring facing surface 339c. Accordingly, as the backflow prevention ring 339 approaches the head body portion 332, that is, as the clearance between the head facing surface 332c and the backflow prevention ring facing surface 339c is narrowed, a force F2 for pushing the backflow prevention ring 339 back is increased by a wedge effect.

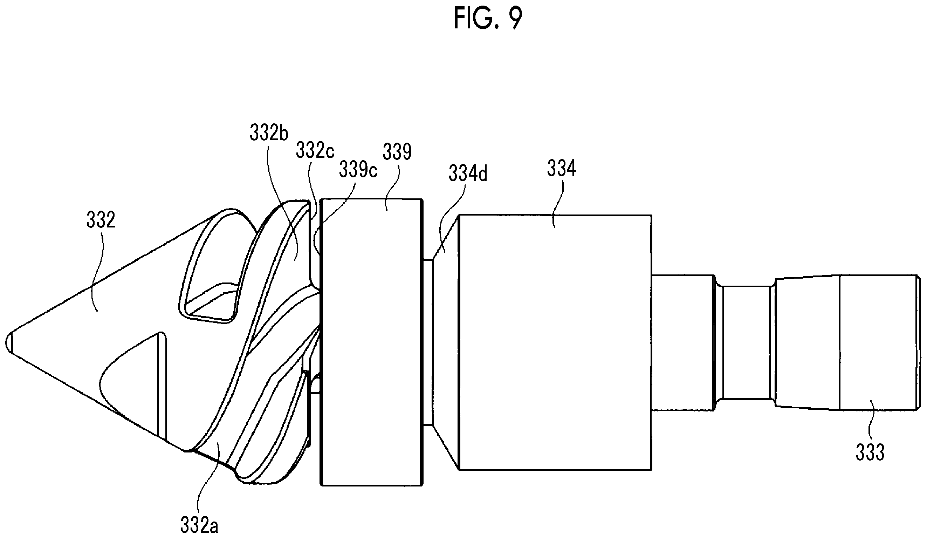

Fig. 9 is a side view showing a state of the screw head unit during the plasticizing process. Fig. 10 is a sectional view showing a state of the screw head unit during the plasticizing process.

As shown in Figs. 9 and 10, the force F1 for pushing the backflow prevention ring 339 generated by the flow of the molding material and the force F2 for pushing the backflow prevention ring 339 back generated by the wedge effect are balanced with each other. Accordingly, in the plasticizing process, it is possible to rotate the screw 330 in a state where the head facing surface 332c and the backflow prevention ring facing surface 339c do not come into contact with each other.

In addition, a path through which the backflow prevention ring 339 moves to a position in the balanced state is not limited. For example, the backflow prevention ring 339 may be moved forward by the pushing force F1 generated by the flow of the molding material, and the backflow prevention ring 339 may move to be turned rearward by the pushing back force F2 generated by the wedge effect after the backflow prevention ring facing surface 339c comes into contact with the head facing surface 332c. In addition, the backflow prevention ring 339 may move forward by the pushing force F1 generated by the flow of the molding material and may move to the position at which the pushing force F1 generated by the flow of the molding material and the pushing back force F2 generated by the wedge effect are balanced with each other.

Hereinbefore, according to the configuration of the first embodiment, during the plasticizing process in which the screw 330 is rotated, the head groove portion 332a is provided, and thus, it is possible to generate the force F2 for pushing the backflow prevention ring 339 back in the direction of the seal ring 334. The backflow prevention ring facing surface 339c of the backflow prevention ring 339 can be separated from the head facing surface 332c of the head body portion 332 by the pushing back force F2. Accordingly, during the plasticizing process, it is possible to prevent the head facing surface 332c of the screw head 331 rotating together with the flight screw 335 and the backflow prevention ring facing surface 339c of the non-co-rotation backflow prevention ring 339 from coming into slide contact with each other and wearing.

Particularly, in a case where the molding material having a high viscosity is used, the force F1 for pushing the backflow prevention ring 339 in the direction of the screw head 331 is large. Accordingly, in a configuration of the related art in which the screw head and the backflow prevention ring come into slide contact with each other during the plasticizing process, a surface pressure increases, and the wear is promoted. In addition, in a case where the molding is performed at a high cycle, a sliding movement distance increases, and thus, the wear is promoted. Meanwhile, according to the configuration of the first embodiment, the backflow prevention ring 339 is separated from the screw head 331, and thus, even in the case where the molding material having a high viscosity is used or the molding is performed at a high cycle, it is possible to suppress the wear.

In addition, in the configuration of the related art, in order to suppress the wear, a material having a high wear resistance is used as a material of the backflow prevention ring 339 or the screw head 331. Meanwhile, according to the configuration of the first embodiment, it is possible to suppress the wear without using a material having a high wear resistance. Accordingly, selectivity of the material of the backflow prevention ring 339 or the screw head 331 is improved, and for example, it is possible to decrease a cost.

### <<Second Embodiment>>

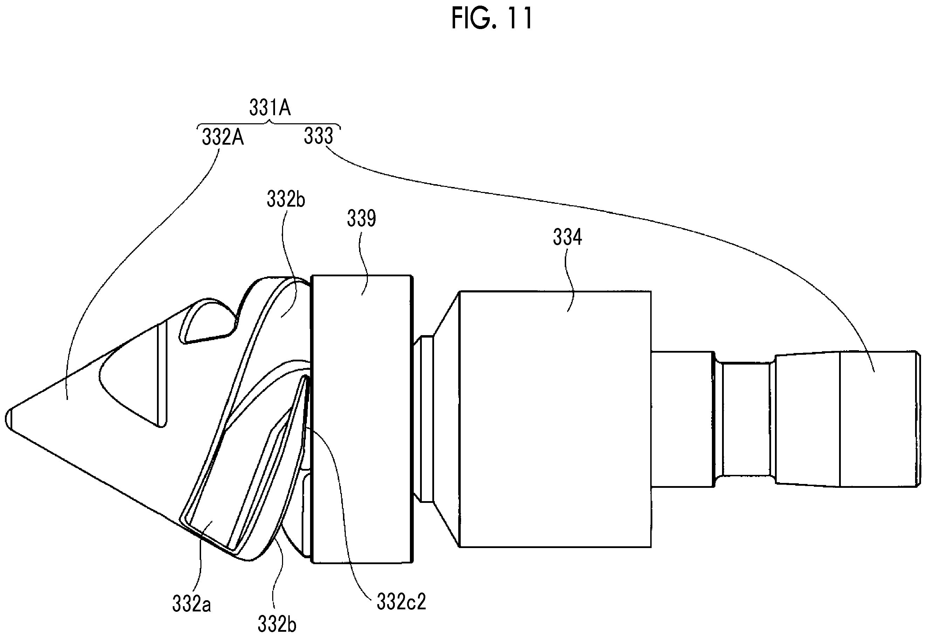

Next, an injection molding machine according to a second embodiment will be described. Compared to the injection molding machine according to the first embodiment, in the injection molding machine according to the second embodiment, a shape of the head body portion 332 of the screw head 331 is different. Other shapes are similar to the molding machine of the first embodiment, and thus, overlapping descriptions thereof are omitted. Fig. 11 is a side view of a screw head unit of the second embodiment.

A screw head 331A of the second embodiment includes a head body portion 332A and the rod portion 333. In addition, in the head body portion 332A, the spiral head groove portion 332a is formed in the direction opposite to the rotation direction of the groove 338 of the flight screw 335.

In addition, a surface, which faces the front end surface of the backflow prevention ring 339, among the side surfaces forming the head groove portion 332a is referred to as the groove portion side surface 332b. Moreover, a head facing surface 332c2 which faces the backflow prevention ring 339 is formed on a rear end of the head body portion 332.

Here, the head facing surface 332c2 is formed to have a taper surface which is inclined to be separated from the backflow prevention ring facing surface 339c toward the front side in the rotation direction R and to be close to the backflow prevention ring facing surface 339c toward a rear side in the rotation direction R. That is, a clearance between the head facing surface 332c2 and the backflow prevention ring facing surface 339c is widened toward the front side in the rotation direction R and a is narrowed toward the rear side in the rotation direction R. Therefore, according to a relationship between the head facing surface 332c2 and the backflow prevention ring facing surface 339c rotating in the rotation direction R, it is possible to generate a force for pushing the backflow prevention ring 339 back in the direction of the seal ring 334 by the wedge effect.

Hereinbefore, according to the configuration of the second embodiment, during the plasticizing process in which the screw 330 is rotated, the head groove portion 332a and the head facing surface 332c2 which is the taper surface are provided, and thus, it is possible to generate the force for pushing the backflow prevention ring 339 back in the direction of the seal ring 334. Accordingly, during the plasticizing process, it is possible to prevent the head facing surface 332c of the screw head 331 rotating together with the flight screw 335 and the backflow prevention ring facing surface 339c of the non-co-rotation backflow prevention ring 339 from coming into slide contact with each other and wearing.

Hereinbefore, the embodiments and the like of the injection molding machine are described. However, the present invention is not limited to the above-described embodiments, and various modifications and improvements can be made within a scope of the present invention described in claims.

### Brief Description of the Reference Symbols

10: injection molding machine
340: plasticizing motor (rotating means)
350: injection motor (forward/rearward movement means)
300: injection unit
310: cylinder
320: nozzle
330: screw
331, 331A: screw head
332, 332A: head body portion
333: rod portion
334: seal ring
335: flight screw
336: rotary shaft
337: flight
338: groove
339: backflow prevention ring
332a: head groove portion
332b: groove portion side surface
332c, 332c2: head facing surface
339c: backflow prevention ring facing surface
339d: backflow prevention ring abutment surface
334d: seal ring abutment surface

## Claims

1. An injection unit (300) comprising:
a cylinder (310);
a screw (330) which is disposed to be rotatable and movable forward or rearward in the cylinder (310);
rotating means (340) for rotating the screw (330); and
forward/rearward movement means (350) for moving the screw (330) forward or rearward,
wherein the screw (330) includes a screw head (331), a seal ring (334), and a flight screw (335) which integrally rotate with each other, and a non-co-rotation backflow prevention ring (339), **characterized in that** the screw head (331) includes a head groove portion (332a) which is spirally formed in a direction opposite to a direction of a spiral groove (338) which is formed along a flight (337) of the flight screw (335).

2. The injection unit according to claim 1,
wherein the screw head (331) includes groove portion side surfaces (332b) which form the head groove portion (332a), and
wherein a groove portion side surface (332b), which faces the backflow prevention ring (339), among the groove portion side surfaces (332b) has a taper which is inclined to be separated from the backflow prevention ring (339) toward a front side in a rotation direction of the screw (330) and to be close to the backflow prevention ring (339) toward a rear side in the rotation direction of the screw (330).

3. An injection molding machine (10) comprising the injection unit (300) according to claim 1 or 2.

## Patentansprüche

1. Einspritzeinheit (300), umfassend:
einen Zylinder (310);
eine Schnecke (330), die angeordnet ist, um drehbar und vorwärts oder rückwärts im Zylinder (310) bewegbar zu sein;
Drehmittel (340) zum Drehen der Schnecke (330); und
Vorwärts-/Rückwärtsbewegungsmittel (350) zum Bewegen der Schnecke (330) vorwärts oder rückwärts,
wobei die Schnecke (330) einen Schneckenkopf (331), einen Dichtungsring (334) und einen Schneckengang (335), die integral miteinander drehen, und einen nicht ko-rotierenden Rückstromverhinderungsring (339) enthält, **dadurch gekennzeichnet, dass**
der Schneckenkopf (331) einen Kopfnutabschnitt (332a) enthält, der spiralförmig in einer Gegenrichtung zu einer Richtung einer spiralförmigen Nut (338) ausgebildet ist, die entlang eines Gangs (337) des Schneckengangs (335) ausgebildet ist.

2. Einspritzeinheit nach Anspruch 1,
wobei der Schneckenkopf (331) Nutabschnittsseitenflächen (332b) enthält, die den Kopfnutabschnitt (332a) ausbilden, und
wobei eine Nutabschnittsseitenfläche (332b), die dem Rückstromverhinderungsring (339) zugewandt ist, von den Nutabschnittsseitenflächen (332b) eine Abschrägung aufweist, die geneigt ist, um in Richtung einer Vorderseite in einer Drehrichtung der Schnecke (330) vom Rückstromverhinderungsring (339) getrennt zu sein und in Richtung einer Rückseite in der Drehrichtung der Schnecke (330) nahe am Rückstromverhinderungsring (339) zu sein.

3. Spritzgießmaschine (10), umfassend die Einspritzeinheit (300) nach Anspruch 1 oder 2.

## Revendications

1. Une unité d'injection (300) comprenant :
un cylindre (310) ;
une vis (330) qui est disposée pour pouvoir tourner et se déplacer vers l'avant ou vers l'arrière dans le cylindre (310) ;
des moyens de rotation (340) pour tourner la vis (330) ; et
des moyens de déplacement vers l'avant/vers l'arrière (350) pour déplacer la vis (330) vers l'avant ou vers l'arrière,
dans laquelle la vis (330) comprend une tête de vis (331), une bague d'étanchéité (334), et une vis sans fin (335) qui tournent intégralement les unes avec les autres, et une bague anti-reflux sans co-rotation (339), **caractérisée en ce que** la tête de vis (331) comprend une partie de rainure de tête (332a) qui est formée en spirale dans une direction opposée à une direction de rainure en spirale (338) qui est formée le long d'un filetage (337) de la vis sans fin (335).

2. L'unité d'injection selon la revendication 1,
dans laquelle la tête de vis (331) comprend des surfaces latérales de partie de rainure (332b) qui forment la partie de rainure de tête (332a), et
dans laquelle une surface latérale de partie de rainure (332b), qui fait face à la bague anti-reflux (339), parmi les surfaces latérales de partie de rainure (332b), présente un effilement qui est incliné afin d'être séparé de la bague anti-reflux (339) vers un côté avant dans une direction de rotation de la vis (330), et d'être rapproché de la bague anti-reflux (339) vers un côté arrière dans la direction de rotation de la vis (330).

3. Une machine de moulage par injection (10) comprenant l'unité d'injection (300) selon la revendication 1 ou 2.
